# EUROPÄISCHE PATENTSCHRIFT

(11) **EP 2 679 550 B1**
(45) Veröffentlichungstag und Bekanntmachung des Hinweises auf die Patenterteilung: **03.12.2014**
(21) Anmeldenummer: 12004747.7
(22) Anmeldetag: 25.06.2012
(51) Int. Cl.: C03B 23/025

(54) **Biegeform und Verfahren zur Herstellung von konturiertem Glas**
Bending shape and method for producing contoured glass
Forme de cintrage et procédé de fabrication de verre à contour

(43) Veröffentlichungstag der Anmeldung: 01.01.2014
(73) Patentinhaber: Flabeg GmbH, 93437 Furth im Wald (DE)
(72) Erfinder: Baumann, Josef, 93453 Neukirchen (DE)
(74) Vertreter: Tergau & Walkenhorst

(56) Entgegenhaltungen:
- WO-A1-2009/002158
- FR-A- 412 231
- GB-A- 191 104 402
- US-A- 3 484 226

## Beschreibung

Die Erfindung betrifft eine Biegeform, insbesondere zur Herstellung von konturiertem oder gebogenem Glas aus Flachglas wie beispielsweise als Substrat für einen Solarspiegel, mit einem Halterahmen, der eine von einer Anzahl von annähernd parallel zueinander ausgerichteten Stützrippen gebildete Stützstruktur trägt, wobei die Stützrippen an einer Anzahl von Auflagepunkten jeweils auf einem Halterohr des Halterahmens aufliegen. Sie bezieht sich weiter auf ein Verfahren zur Herstellung von konturiertem Glas.

In einer Vielzahl von technischen Anwendungen ist die Herstellung von konturiertem oder gebogenem Glas, beispielsweise aus Flachglas als Ausgangskörper, erforderlich oder vorgesehen. Beispielsweise kommen in Solarmodulen, Parabolrinnenkraftwerken oder solarthermischen Anlagen Parabolspiegel zum Einsatz, die auf einem parabelförmig gebogenen Glaselement als Grundkörper oder Substrat beruhen.

Die Herstellung von derartig konturiertem oder gebogenem Glas aus einer Flachglasscheibe als Ausgangskörper kann beispielsweise mittels eines thermischen Verfahrens erfolgen, bei dem die Flachglasscheibe erhitzt und damit verformbar gemacht wird und in diesem Zustand mit einer Gussform in Kontakt gebracht und damit in die gewünschte Sollkontur versetzt wird. Hierzu können Biegeformen eingesetzt werden, bei denen eine Stützstruktur die für den herzustellenden Glaskörper gewünschte Kontur aufweist. Die Flachglasscheibe wird dabei üblicherweise auf die Biegeform aufgelegt und bis zur Verformbarkeit oder Erweichung erhitzt. gravitations- oder schwerkraftbedingt passt sich die Flachglasscheibe in diesem Zustand der Oberflächenkontur der Stützstruktur an, so dass das Glas nach der Behandlung die von der Stützstruktur vorgegebene Konturierung aufweist.

Zum Einsatz in einem derartigen Verfahren geeignete Biegeformen der oben genannten Art sind beispielsweise aus der US 3,484,226 oder aus der WO 2009/002158 A1 bekannt. Bei diesen bekannten Biegeformen wird die Stützstruktur für das herzustellende konturierte Glas von einer Anzahl von annähernd parallel zueinander ausgerichteten Stützrippen gebildet, deren obere Kante jeweils entsprechend der gewünschten und herzustellenden Kontur des Glaskörpers geformt ist. Die Stützrippen sind dabei mit einem geeigneten Abstand zueinander positioniert, so dass sie in ihrer Gesamtheit den entstehenden verformten Glaskörper tragen können und die entstehende Kontur des gebogenen Glases durch die durch ihre Oberkanten definierte Fläche bestimmt ist. Die Stützrippen sind dabei in einem Halterahmen geeignet gehalten.

Gerade bei der Herstellung von gebogenem oder konturiertem Glas in Solarmodulen oder solarthermischen Anlagen ist auch bei der Produktion einer vergleichsweise großen Stückzahl derartiger Glaselemente eine hochgenaue und präzise Konturierung der Gläser von besonderer Bedeutung. Bei der Verwendung in solartechnischen Anlagen bestimmt nämlich die genaue Konturierung und Positionierung der aus den Glaselementen gefertigten Spiegelelemente maßgeblich den Wirkungsgrad der Gesamtanlage, wobei selbst vergleichsweise geringe Ungenauigkeiten und Fehljustierungen den Wirkungsgrad in unerwünschter Weise erheblich beeinträchtigen können.

Der Erfindung liegt daher die Aufgabe zugrunde, eine Biegeform der oben genannten Art anzugeben, die auf vergleichsweise einfache Weise eine Herstellung auch vergleichsweise großer Stückzahlen konturierter oder gebogener Gläser mit besonders hoher Präzision und Genauigkeit ermöglicht. Zudem soll ein besonders geeignetes Verfahren zur Herstellung von konturiertem Glas angegeben werden.

Bezüglich der Biegeform wird diese Aufgabe erfindungsgemäß gelöst, indem die oder jede Stützrippe im Bereich der Auflagepunkte in Relation zum jeweiligen Halterohr derart konturiert ist, dass sie an zumindest einem der Auflagepunkte in ihrer Längsrichtung gesehen relativ zum Halterohr um eine Distanz von mindestens 0,5 mm, bevorzugt mindestens 3 mm, vorzugsweise mindestens 5 mm, verschiebbar ist.

Die Erfindung geht dabei von der Überlegung aus, dass für eine hochgenaue Fertigung auch größerer Stückzahlen des konturierten Glases die verwendete Biegeform gezielt an die Besonderheiten des Herstellungsprozesses angepasst sein sollte. Insbesondere sollte dabei dem Umstand Rechnung getragen werden, dass herstellungsbedingt die Biegeform einschließlich des auf ihr positionierten Glaskörpers thermische Zyklen durchlaufen muss, wobei nach dem Beladen der Biegeform mit dem Ausgangsglas, also insbesondere einer Flachglasscheibe, die Biegeform mit samt der Glasscheibe auf Temperaturen oberhalb des Erweichungspunkts des Glases aufgeheizt wird. Nachdem die schwerkraftbedingte Verformung des erweichten Glases stattgefunden und der Glaskörper bedingt durch die Kontur der Stützstruktur die gewünschte Form angenommen hat, wird die Biegeform samt dem nun konturierten Glas wieder abgekühlt, so dass dieses anschließend entnommen werden kann. Daraufhin wird die Biegeform für den Konturierungsprozess eines weiteren Glaskörpers bereitgestellt.

Herstellungsbedingt ist die Biegeform somit aufeinander folgenden thermischen Zyklen mit signifikanten Temperaturänderungen ausgesetzt. Um dennoch auch im Hinblick auf die damit verbundene thermische Ausdehnung der einzelnen Komponenten und Bauteile der Biegeform Beeinträchtigungen der Konturierung zu vermeiden, sollte die Biegeform gezielt spannungsfrei zwischen den einzelnen Komponenten gehalten werden. Hierzu ist insbesondere vorgesehen, dass die Stützrippen, die an den Auflagepunkten und insbesondere mit ihren beiden Enden jeweils zur Abstützung auf einem Halterohr des Halterahmens aufliegen, zumindest an einem ihrer Auflagepunkte in ihrer Längsrichtung gesehen beweglich und/oder mit ausreichend Spiel gelagert sind. Bei einer thermisch bedingten Ausdehnung oder Kontraktion der Stützrippen in ihrer Längsrichtung gesehen kann das freie Ende somit relativ zum Halterahmen bewegt werden, so dass eine Verspannung der jeweiligen Stützrippe in Folge einer unterschiedlichen thermischen Ausdehnung im Vergleich zum Halterahmen vermieden ist.

Um dies zu ermöglichen, ist die jeweilige Stützrippe zumindest an einem ihrer Auflagepunkte in ihrer Längsrichtung gesehen ausreichend verschiebbar relativ zum zugeordneten Halterohr gelagert, so dass an diesem Punkt einer beispielsweise thermisch bedingten Längenänderung nachgegeben werden kann. Im Hinblick auf übliche Dimensionierung derartiger Biegeformen wird eine Verschiebbarkeit von mindestens 0,5 mm als geeignet und voraussichtlich ausreichend angesehen; abhängig von Materialwahl, Dimensionierung und zu erwartender Prozessführung und -temperaturen kann aber auch ein anderer Mindestwert für die freie Verschiebbarkeit vorgesehen sein, um das Kriterium "ausreichende Verschiebbarkeit" zu erfüllen.

Die oder jede Stützrippe kann dabei derart ausgeführt sein, dass sie jeweils mit einer Auflagefläche auf dem jeweiligen Halterohr aufliegt. Um bei dieser Bauweise das vorgesehene Auslegungskonzept der verschiebbaren Lagerung an zumindest einem der Auflagepunkte auf besonders günstige Weise umzusetzen, ist in vorteilhafter Weiterbildung die Auflagefläche, mit der die jeweilige Stützrippe auf dem jeweiligen Halterohr aufliegt, in Längsrichtung der Stützrippe gesehen nach innen hin oder in Richtung zum benachbarten Auflagepunkt hin mit einem ausreichend bemessenen Überstand über das jeweilige Halterohr versehen, so dass unter den zu erwartenden Temperaturschwankungen die gewünschte Beweglichkeit der Stützrippe relativ zum Halterohr gewährleistet ist. Dazu ist die Kontur der jeweiligen Stützrippe in Relation zum Halterohr vorzugsweise derart gewählt und dimensioniert, dass an zumindest einem Auflagepunkt jeder Stützrippe die jeweilige Auflagefläche in ihrer planaren Länge den Kontaktbereich des zugeordneten Halterohrs in Richtung zum benachbarten Auflagepunkt hin, insbesondere nach innen hin, um mindestens 0,5 mm, vorzugsweise um mindestens 1 mm, besonders bevorzugt um etwa 3 mm, überragt.

Unter "planarer Länge" ist hierbei insbesondere die Länge der jeweiligen Auflagefläche in Längsrichtung der jeweiligen Stützrippe zu verstehen, in der die jeweilige Auflagefläche im Wesentlichen plan ausgeführt ist, und mit der sie bei montierter Biegeform in kaltem Zustand auf dem zugeordneten Halterohr aufliegt. Diese Länge soll den Bereich, in dem die auf das Halterohr aufliegende Auflagefläche dieses kontaktiert, um mindestens 0,5 mm, vorzugsweise um mindestens 1 mm, besonders bevorzugt um etwa 3 mm, übersteigen. Damit ist erreicht, dass die Stützrippe sich am jeweiligen Auflagepunkt in ihrer Längsrichtung gesehen relativ zum Halterohr zumindest um den genannten Betrag verschieben kann, ohne dass dies in einer Höhenänderung oder einer Beeinträchtigung ihrer Bewegung resultiert.

Besonders bevorzugt ist die oder jede Stützrippe dabei zusätzlich derart ausgeführt, dass sie in ihrer Längsrichtung gesehen an einem weiteren der Auflagepunkte fixiert wird. Dazu ist die oder jede Stützrippe vorzugsweise im Bereich der Auflagepunkte in Relation zum jeweiligen Halterohr derart konturiert, dass sie an zumindest einem weiteren Auflagepunkt in ihrer Längsrichtung gesehen relativ zum Halterohr um eine Distanz von weniger als, vorzugsweise höchstens der Hälfte, besonders bevorzugt höchstens einem Fünftel, der Verschiebedistanz am ersten Auflagepunkt verschiebbar ist. An einem derartigen Fixierpunkt ist die Stützrippe somit vorzugsweise derart konturiert, dass sie relativ zum Halterohr um eine Distanz von weniger als 5 mm, vorzugsweise von weniger als 1 mm, besonders bevorzugt um weniger als 0,5 mm verschiebbar ist. Um bei diesen bevorzugten Ausführungen eine gemeinsame Fixierposition für sämtliche Stützrippen zu schaffen und damit ein in sich besonders konsistentes Profil bei der Reaktion thermische Längenänderungen sicherzustellen, sind diese als Fixierpunkte vorgesehenen Auflagepunkte vorzugsweise für sämtliche Stützrippen demselben Halterohr zugeordnet.

Um eine besonders erleichterte Montage der Biegeform durch Auflegen der Stützrippen auf die Halterohre zu ermöglichen, ist die Auflagefläche der jeweiligen Stützrippe am "freien" Ende vorteilhafterweise offen, also insbesondere ohne eine die Stützrippe nach außen hin begrenzende Fixierkante, ausgeführt. Innenseitig des Halterohrs weist die Stützrippe vorteilhafterweise eine Fixierkante auf, die bei in den Halterahmen eingelegter Stützrippe relativ zum zugeordneten Halterohr einen Abstand von zumindest einigen mm, vorzugsweise etwa 3 mm, aufweist. Durch diesen Abstand, der nach innen hin oder zum benachbarten Auflagepunkt hin den Überstand der Auflagefläche über das Halterohr definiert, ist sichergestellt, dass auch bei einer thermisch bedingten Längenausdehnung der jeweiligen Stützrippe relativ zum Halterahmen sich die Fixierkante ungehindert auf das Halterohr zubewegen kann, ohne dass hierdurch Verspannungen oder Verformungen in die Stützrippe eingetragen werden.

Es hat sich nämlich überraschend gezeigt, dass bei einer Biegeform mit einer Länge von beispielsweise 1,7 m sich die Stützrippen an den nicht fixierten Auflagepunkten während eines thermischen Zyklus (d. h. eines Ofendurchlaufs) um bis zu ca. 3 mm verschieben, und zwar sowohl in positiver Richtung (beim Aufheizen) als auch in negativer Richtung (beim Abkühlen). Dabei liegt der Effekt zugrunde, dass die Stützrippen den Temperaturveränderungen im Vergleich zum Rahmen mit den Halterohren schneller folgen können.

Die Stützrippen könnten derart ausgestaltet sein, dass sie an ihren beiden Enden jeweils eine ausreichend groß bemessene Auflagefläche aufweisen, die im montierten Zustand eine gewisse Beweglichkeit gegenüber dem zugeordneten Halterohr zulässt. Um aber eine hochgenaue Montage beim Einlegen der Stützrippen in den Halterahmen in besonders einfacher Weise zu ermöglichen, ist in besonders vorteilhafter Ausgestaltung die oder jede Stützrippe nach dem Konzept ausgelegt, dass an einem der Auflagepunkte eine Fixierung in Längsrichtung erfolgt, wohingegen an dem oder den anderen Auflagepunkten die genannte "ausreichende Verschiebbarkeit" gegenüber dem zugeordneten Halterohr vorgesehen ist.

Dieses Auslegungsprinzip ist vorteilhafterweise dadurch erreicht, dass an dem zur Fixierung vorgesehenen Auflagepunkt die Kontur der Auflagefläche hinsichtlich Dimensionierung und Verlauf derart an die Querschnittskontur des zugeordneten Halterohrs angepasst ist, dass bei auf das Halterohr aufgelegter Stützrippe konturbedingt eine Verschiebung der Stützrippe in ihrer Längsrichtung - abgesehen von Fertigungstoleranzen und dergleichen - im Wesentlichen vermieden ist. In besonders vorteilhafter Ausgestaltung ist die Stützrippe dazu an einem ihrer Enden und/oder an einem ihrer Auflagepunkte in der Art eines "Einhak-Systems" mit konturierter Auflagefläche versehen. Die jeweilige Auflagefläche ist dabei vorteilhafterweise angepasst an die Querschnittskontur des zugeordneten Halterohrs ausgeführt und weist eine lichte Weite von geringfügig mehr, vorzugsweise etwa 0,05 bis 0,2 mm mehr, besonders bevorzugt etwa 0,1 mm mehr, als die Breite des zugeordneten Halterohrs auf.

Die Anpassung der Auflagefläche an das zugeordnete Halterohr kann dabei durch die genannte Dimensionierung der lichten Weite vorgenommen sein. Vorteilhafterweise ist zusätzlich aber auch noch die Kontur der Auflagefläche an sich angepasst an den Querschnitt des Halterohrs gewählt. Bei einem Halterohr mit rundem Querschnitt könnte dazu die zugeordnete Auflagefläche beispielsweise in ihrer Kontur halbkreisförmig ausgeführt sein. Bei einem Halterohr mit rechteckigem Querschnitt ist hingegen die zugeordnete Auflagefläche vorteilhafterweise im Wesentlichen mit geradliniger Kontur ausgeführt und beidseitig von Fixierkanten begrenzt, wobei die Auflagefläche eine Länge von geringfügig mehr als der Breite des zugeordneten Halterohrs aufweist. Alternativ könnte bei einem Halterohr mit dreieckförmigem Querschnitt die Auflagefläche auch im Wesentlichen als Dreieckskontur mit zwei in einem Scheitelpunkt zusammentreffenden Seitenflanken ausgeführt sein. In diesem Fall könnte die Breite der Dreieckskontur auch geringer als die Breite des Halterohrs sein und würde dennoch eine zufriedenstellende Fixierung bewirken. Gemeinsam mit den Fixierkanten bildet die Auflagefläche somit eine hakenartige oder U-förmige Kontur, mit der die jeweilige Stützrippe im Bereich des jeweiligen Auflagepunkts, also insbesondere endseitig, in das zugeordnete Halterohr eingehängt werden kann. Durch diese Ausgestaltung ist somit in Längsrichtung der Stützrippe gesehen ein Fixpunkt der Stützrippe relativ zum Halterahmen definiert.

Um dabei eine besonders zuverlässige Fixierung der Position unter Vermeidung von Verspannungen zu ermöglichen, ist die Kontur der Auflagefläche dabei in weiterer vorteilhafter Ausgestaltung zwar ähnlich zur Kontur des Halterohres, aber im oberen Bereich sich verjüngend, beispielsweise konisch oder oval, ausgeführt. Damit ist erreicht, dass das Aufliegen der Stützrippe lediglich im Wesentlichen am obersten Punkt der Auflagefläche erfolgt, so dass in der Art einer Selbstzentrierung das Halterohr beim Einbringen jeweils in diese Position geführt wird.

Bei der genannten Ausgestaltung, bei der das jeweils andere Ende oder der andere Auflagepunkt der Stützrippe mit der genannten, relativ zum Halterahmen "freien" Auflagefläche versehen ist, resultieren thermisch bedingte Längenänderungen ausschließlich in einer Verschiebung des "freien" Endes der jeweiligen Stützrippe relativ zum Halterahmen, wobei das "fixierte" Ende oder der "fixierte" Auflagepunkt" der jeweiligen Stützrippe seine Position relativ zum Halterahmen beibehält. Gerade im Hinblick auf den vorgesehenen Einsatz einer Mehrzahl von parallel zueinander ausgerichteten Stützrippen ist damit die fixierte Positionierung sämtlicher Stützrippen an einem gemeinsamen ersten Halterohr ermöglicht, so dass auch bei thermisch bedingten Längenänderungen der Stützrippen die Positionierung der Stützrippen relativ zueinander gleich bleibt. Thermisch bedingte Längenänderungen wirken sich somit für alle Stützrippen gleichermaßen aus, und die thermisch bedingte Ausdehnung erfolgt über die gesamte Breite der Biegeform gleichmäßig. Hierdurch bedingte Störeffekte auf die Konturierung des hergestellten Glaskörpers sind somit besonders gering gehalten.

Vorteilhafterweise sind die Stützrippen jeweils als metallisches Tragblech, vorzugsweise aus Stahlblech, ausgeführt, wobei eine Dicke von 1 bis 3 mm vorzugsweise von 1,5 bis 2,5 mm, besonders bevorzugt von etwa 2 mm, vorgesehen ist.

In alternativer oder zusätzlicher vorteilhafter Ausgestaltung sind die Stützrippen jeweils als Lochblech ausgeführt. Durch diese Ausführung ist bei zuverlässiger Erhaltung der Konturierung eine besonders materialsparende Ausführung der Stützrippen ermöglicht. Hierdurch können die den thermischen Zyklen unterworfenen Massen besonders gering gehalten werden. Zudem ist durch die Löcher ermöglicht, dass bei der Behandlung des Glases dieses infolge der verbesserten Anströmung beim Erwärmen und Abkühlen einen vergleichsweise intensiven Wärmeaustausch mit der umgebenden Ofenatmosphäre hat. Der Flächenanteil der Löcher in den genannten Lochblechen trägt dabei vorteilhafterweise zwischen 5 und 50 %, besonders bevorzugt zwischen 15 und 30 %.

Vorteilhafterweise sind die Stützrippen etwa 30 bis 100 mm, besonders bevorzugt etwa 60 mm, voneinander beabstandet im Halterahmen angeordnet, besonders bevorzugt in Anordnung "hochkant". Der Abstand benachbarter Stützrippen ist dabei besonders bevorzugt angepasst an die herzustellende Kontur des Glases geeignet gewählt. Insbesondere kann ein durchgängig gleicher Abstand der Stützrippen zueinander gewählt sein. Alternativ kann aber auch, insbesondere bei der Herstellung von doppelt gebogenen Konturen, bei der das konturierte Glas nicht nur in Längsrichtung der Stützrippen die durch deren Oberkante vorgegebene Kontur, sondern auch quer zu den Stützrippen eine Krümmung erhält, ein variierender Abstand benachbarter Stützrippen zueinander vorgesehen sein. Der Abstand benachbarter Stützrippen zueinander ist dabei vorteilhafterweise an die lokal vorgesehene Krümmung des herzustellenden konturierten Glases angepasst.

Gerade im Hinblick auf die besonders bevorzugt vorgesehene Verwendung der Biegeform zur Herstellung von konturierten Glaselementen für solartechnische Anwendungen sind die Oberkanten der Stützrippen vorteilhafterweise derart ausgeführt und konturiert, dass die Oberfläche der durch ihre Gesamtheit gebildeten Stützstruktur die herzustellende Kontur des Glases geeignet vorgibt. Dabei könnten beispielsweise auch doppelt gebogene Glaskörper vorgesehen sein, die sowohl in x- als auch in y-Richtung eine Krümmung, ggf. auch abweichend voneinander oder sogar gegensätzlich zueinander, aufweisen. Vorzugsweise ist die Biegeform aber zur Herstellung eines konturierten Glases zur Verwendung in einer solarthermischen Anlage ausgeführt. In derartigen Anlagen werden aus einer Vielzahl von Spiegelkomponenten Parabolrinnen, also entlang ihrer Längsrichtung ausgedehnte Rinnen mit parabelförmigem Querschnitt, zusammengesetzt. Die einzelnen Spiegelkomponenten bilden dabei für einen der Parabeläste jeweils ein Segment, wobei insbesondere im Hinblick auf gängige Systemauslegungen die jeweilige Parabel aus vier Spiegelkomponenten gebildet sein kann. Vorteilhafterweise sind daran angepasst die Oberkanten der Stützrippen jeweils in Form eines Parabelsegments ausgeführt. Für die gesamte Parabolrinnenstruktur kommen dabei mehrere Biegeformen mit jeweils unterschiedlicher Oberfläche ihrer Stützstruktur zum Einsatz, die in ihrer Gesamtheit alle zur Bildung der Parabolrinne vorgesehenen Komponenten bilden.

Vorteilhafterweise sind die Oberkanten der Stützrippen jeweils mit Fase, vorzugsweise mit einer Basisdiagonalen mit einer Länge von 0,1 bis 0,5 mm, besonders bevorzugt von etwa 0,2 mm, ausgeführt.

In besonders vorteilhafter Ausgestaltung ist nicht nur die Verbindung der Stützrippen mit dem Halterahmen, sondern zusätzlich auch noch der Halterahmen an sich für eine besonders weitgehende Vermeidung der Einleitung thermisch induzierter Verspannungen ausgeführt. Dazu sind vorteilhafterweise die die Stützrippen tragenden Halterohre ihrerseits verschiebbar, also insbesondere unter Vermeidung einer mechanisch festen Verbindung, auf entsprechende Elemente eines Grundrahmens aufgelegt. Vorzugsweise sind dazu Stützen vorgesehen, die lediglich mit einer der Komponenten Halterohr, Grundrahmen fest verbunden, beispielsweise verschweißt, sind. Die Stützen könnten dabei mit den Halterohren verschweißt sein und auf dem Grundrahmen lediglich lose aufliegen, aber bevorzugt sind die Stützen am Grundrahmen des Halterahmens befestigt, und die Halterohre liegen lose auf ihnen auf. Durch dieses Konstruktionsprinzip ist sichergestellt, dass bei thermisch induzierten Längenänderungen einzelner Komponenten oder Bauteile auch die Halterohre an sich frei von mechanischen Verspannungen gehalten werden können. Zur Positionierung der Halterohre können dabei am Grundrahmen befestigte Seitenbleche vorgesehen sein, die eine zu große Verschiebung der Halterohre in ihrer Längsrichtung geeignet begrenzen. Die Seitenbleche können dabei ausreichend dünn bemessen sein, so dass sie ausreichend nachgiebig sind, um eine thermisch bedingte Längenausdehnung der Halterohre nicht zu behindern, wobei die Halterohre dennoch grundsätzlich in ihrer Position gehalten werden.

In weiterer vorteilhafter Ausgestaltung ist der Grundrahmen des Halterahmens mit einer Anzahl von Diagonalstreben versteift, so dass auch im Hinblick auf die zu erwartende thermische Beanspruchung des Rahmens während des Herstellprozesses die hierdurch bedingten Formänderungen besonders gering gehalten werden können.

Die die Stützrippen tragenden Halterohre können in geeigneter Form, beispielsweise als Rundrohre, ausgeführt sein. Um aber besonders geeignete Kontaktflächen für die Auflageflächen der Stützrippen zu bieten und damit die mechanische Stabilität des Systems insgesamt zu begünstigen, sind die Halterohre vorteilhafterweise als Rechteckrohre, vorzugsweise mit Querschnittsabmessungen von etwa 60 mm x etwa 30 mm (Höhe x Breite), ausgeführt.

Um die Stützrippen besonders zuverlässig in ihrer vorgesehenen Orientierung, also insbesondere hochkant, zu halten, sind in weiterer vorteilhafter Ausgestaltung seitliche Führungsmittel zur Abstützung der Stützrippen vorgesehen. Hierzu sind in besonders vorteilhafter Ausgestaltung an den Halterohren Fixierbügel befestigt, die die Stützrippen seitlich abstützen. In alternativer vorteilhafter Ausgestaltung können die Fixierbügel auch an separaten Bügeltragrohren befestigt sein. Durch diese Ausgestaltung ist vermieden, dass beim Anschweißen oder Befestigen der Fixierbügel thermische Spannungen oder ein Verzug in die eigentlichen Halterohre eingeleitet werden. Um in beiden Varianten eine geeignete Fixierung der Stützrippen in der gewünschten Orientierung zu ermöglichen, sind die Fixierbügel dabei vorteilhafterweise in einem spezifisch an die Stützrippen angepassten Abstand zueinander, besonders vorteilhafterweise in einem Abstand von etwa 1 mm mehr als der vorgesehenen Dicke der Stützrippen, voneinander am Halterohr angeordnet.

Um eine besonders günstige und zuverlässige seitliche Abstützung der Stützrippen zu gewährleisten, weisen die Fixierbügel dabei vorteilhafterweise eine Höhe von mindestens der Hälfte der Höhe der Stützrippen und höchstens der vollen Höhe der Stützrippen auf. Die Fixierbügel sind in alternativer oder zusätzlicher vorteilhafter Ausgestaltung aus Draht, bevorzugt aus Stahldraht, und mit einem Durchmesser von vorzugsweise zwischen 2 und 10 mm, besonders bevorzugt von etwa 5 mm, gefertigt.

Die Fixierbügel können dabei mit im Wesentlichen geradlinigen und senkrecht ausgerichteten Seitenkanten ausgeführt sein, so dass die für die Aufnahme der jeweiligen Stützrippe vorgesehene freie Lücke zwischen zwei benachbarten Fixierbügeln eine im Wesentlichen konstante lichte Weite aufweist. Alternativ können die Fixierbügel aber auch mit zwar geradlinigen, aber leicht schräg ausgerichteten Seitenkanten ausgeführt sein, so dass die zwischen ihnen befindliche Lücke konische Gestalt aufweist, oder sie können konturiert ausgeführt sein, wobei die lichte Weite zwischen zwei benachbarten Fixierbügeln am offenen Ende größer ist als im Bodenbereich, wo die Fixierbügel an den Halterohren befestigt sind. Dadurch entsteht eine Lücke zwischen benachbarten Fixierbügeln mit zum jeweiligen Halterohr hin abnehmender lichter Weite, so dass bei zuverlässiger seitlicher Fixierung der jeweiligen Stützrippe eine besonders erleichterte Einbringung zwischen die Fixierbügel ermöglicht ist. Zudem kann dadurch sichergestellt werden, dass Änderungen der Abmessungen des Glases beim Herstellungsprozess (vor allem durch Erwärmung und/oder Abkühlung) weitgehend ohne Querverschiebungen des Glases in Relation zu den Oberkanten der Stützrippen erfolgen können. Dazu sind die Fixierbügel in weiterer vorteilhafter Ausgestaltung derart konturiert ausgeführt, dass durch eine Aufweitung der Lücken zwischen ihnen zum freien Ende hin eine gewisse seitliche Beweglichkeit (hauptsächlich durch Verkippen der Rippen) gegeben ist.

Bezüglich des Verfahrens wird die genannte Aufgabe gelöst, indem ein AusgangsGlaskörper, insbesondere ein Flachglas, auf eine Biegeform der genannten Art aufgelegt und anschließend gemeinsam mit der Biegeform auf eine Temperatur oberhalb der Erweichungstemperatur von Glas aufgeheizt wird.

Gerade bei der Herstellung von Substraten für Spiegelelemente zur Verwendung in solarthermischen Anlagen oder Parabolrinnenkraftwerken ist eine besonders genaue Konturierung der Glaselemente besonders bedeutsam, da die zusammengesetzten Glaselemente im Querschnitt der entstehenden Parabolrinne gesehen die vorgesehene Parabelform aus Gründen eines hohen Wirkungsgrads besonders genau einhalten sollen. Demzufolge wird das Glas vorteilhafterweise im Längsschnitt gesehen mit der Kontur eines Soll-Parabelsegments hergestellt, das hinsichtlich seiner Parabelparameter geeignet im Hinblick auf den vorgesehenen Positionierungsort in der Parabolrinne gewählt wird. Um dieses Soll-Parabelsegment aber besonders genau herstellen zu können, sollte herstellungsbedingten Ungenauigkeiten und Abweichungen auf geeignete Weise Rechnung getragen werden. Wie sich völlig überraschend herausgestellt hat, ist dies auf besonders einfache und zuverlässige Weise möglich, indem der Ausgangsglaskörper beim Auflegen auf die Stützrippen der Biegeform in der Art einer "Offset-Positionierung" derart positioniert wird, dass die Stützrippen im Auflagebereich ein Ist-Parabelsegment bilden, das in x-Richtung der Parabel gesehen relativ zum Soll-Parabelsegment um einen vorgegebenen Offset-Betrag verschoben ist.

Bei einem derartigen "Offset" oder auch Vorhalt ist in überraschender Weise durch eine Verschiebung der Position auf einfache Weise die Korrektur von herstellungsbedingten Fehlern möglich. Der Offset oder Vorhalt kann dabei bereits bei der Auswahl der Biegeform und der Krümmung der Oberkanten der Stützrippen geeignet berücksichtigt werden; vergleichsweise kleine Fehler können aber auch durch nachträgliche Korrektur der Positionierung des auf der Biegeform aufliegenden Ausgangs-Glaskörpers kompensiert werden, ohne dass ein neues Werkzeug gefertigt werden müsste. Im Hinblick auf übliche Dimensionierungen derartiger Glaselemente und Biegeformen wird vorteilhafterweise als Offset-Betrag eine Verschiebung von etwa 20 cm bis 30 cm, vorzugsweise von etwa 23 cm, gewählt.

Dieser Offset ist dabei insbesondere im Hinblick auf übliche Spiegelgrößen von beispielsweise 1,7 m x 1,7 m gewählt. Insbesondere bilden dabei vier Sollsegmente eine Parabel, wobei die Segmente der Biegeform nach "innen", also zum Scheitel der Parabel hin, verschoben sind, so dass sich die beiden inneren Segmente "überlappen". Insbesondere kann der Offset dabei so groß sein, dass der Stützrippenverlauf wegen des Offsets das Sollsegment nicht mehr ganz umfasst. Die vergleichsweise geringen Überstände der Stützrippen dienen dann nur noch dazu, das Flachglas im ungebogenen Zustand aufzunehmen (dieser ist etwas breiter als im gebogenen Zustand) und um in der Prozesskontrolle minimale Korrekturen des Offsets zu ermöglichen.

Die mit der Erfindung erzielten Vorteile bestehen insbesondere darin, dass durch die geeignete Dimensionierung der Auflageflächen der Stützrippen in Relation zur Dimensionierung der sie jeweils tragenden Halterohre die thermisch bedingten Längenänderungen der Stützrippen während des Herstellungsprozesses des Glases vom System geeignet aufgenommen werden können, ohne dass hierdurch Verspannungen in die Stützrippen eingeleitet werden. Damit ist selbst im Hinblick auf die herstellungsbedingt vorgesehenen thermischen Zyklen eine durch die Längenänderung der Stützrippen bedingte unerwünschte Änderung der Konturen besonders gering gehalten. Insbesondere ist durch die freie Beweglichkeit des zumindest einen Endes der Stützrippen relativ zum Halterahmen in Längsrichtung der Stützrippen gesehen ist sichergestellt, dass auch bei thermisch bedingt auftretenden Längenänderungen der Stützrippen relativ zum Halterahmen die durch die Oberkante der jeweiligen Stützrippe gegebene Konturierung, die das Glas beim Herstellungsprozess annimmt, erhalten bleibt und nicht durch auftretende Verspannungen beeinträchtigt wird. Damit ist auch bei vergleichsweise hohen Stückzahlen mit entsprechender Anzahl der thermischen Zyklen, denen die Biegeform ausgesetzt wird, eine besonders hohe, gleichbleibende Präzision und Genauigkeit bei der Konturierung der hergestellten Glaskörper erreichbar.

Ein Ausführungsbeispiel der Erfindung wird anhand einer Zeichnung näher erläutert. Darin zeigen:
- FIG. 1: eine Biegeform zur Herstellung von konturiertem oder gebogenem Glas,
- FIG. 2: einen Halterahmen der Biegeform gemäß FIG. 1,
- FIG. 3: eine Stützrippe der Biegeform gemäß FIG. 1 in seitlicher Ansicht, und
- FIG. 4: einen Ausschnitt aus FIG. 3.

Gleiche Teile sind in allen Figuren mit denselben Bezugszeichen versehen.

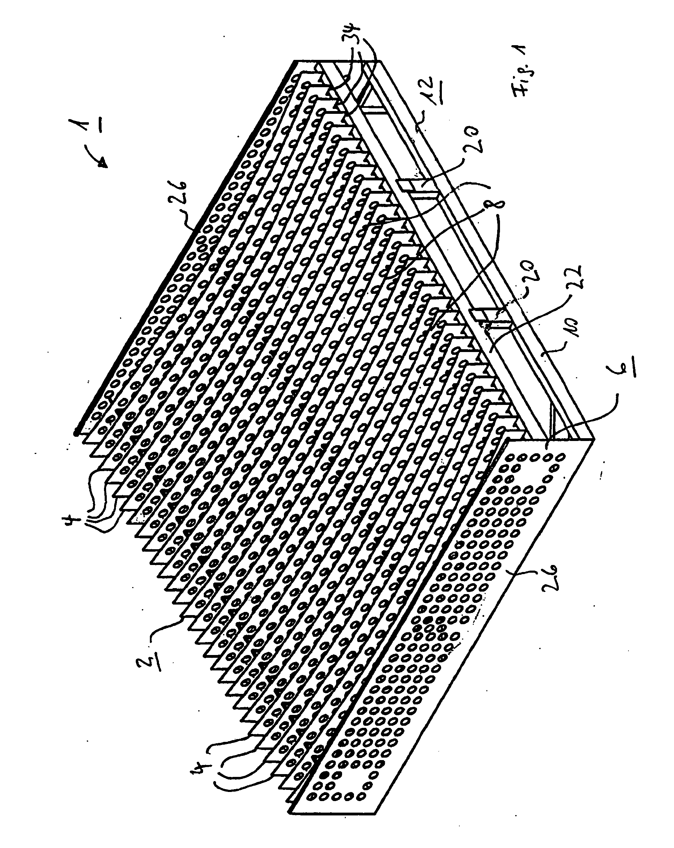

Die Biegeform 1 gemäß FIG. 1 ist zur Herstellung von konturiertem oder gebogenem Glas aus einer Flachglasscheibe vorgesehen. Das konturierte Glas soll dabei insbesondere zur Verwendung in einer solartechnischen Anlage, beispielsweise einer solarthermischen Anlage, dienen.

Die Biegeform 1 weist dazu eine Stützstruktur 2 auf, die ihrerseits von einer Mehrzahl von annähernd parallel zueinander ausgerichteten Stützrippen 4 gebildet ist. Die im Ausführungsbeispiel jeweils als vergleichsweise dünnes Stahlblech mit einer Blechdicke etwa 2 mm ausgeführten Stützrippen sind dabei hochkant in einem Halterahmen 6 angeordnet. Die im montierten Zustand der Stützrippen 4 nach oben weisenden Oberkanten 8 sind dabei ihrerseits konturiert, insbesondere in der Form einer Parabel, ausgeführt und bilden in ihrer Gesamtheit eine konturierte Stützfläche für das Glas, die die herzustellende Kontur des bearbeiteten Glases vorgibt.

Bei der Herstellung des konturierten Glases wird eine Flachglasscheibe von oben auf die Biegeform 1 aufgelegt, und anschließend wird die Biegeform 1 mit samt der aufgelegten Flachglasscheibe auf eine Temperatur oberhalb der Erweichungstemperatur des Glases aufgeheizt. Nach Überschreiten der Erweichungstemperatur schmiegt sich das Glas schwerkraftbedingt an die von den Oberkanten 8 der Stützrippen 4 definierte Flächenkontur an. Nach dem anschließenden Erkalten behält das Glas die solchermaßen vorgegebene Kontur bei.

Die Biegeform 1 ist in ihrer Gesamtheit für eine besonders hochgenaue Beibehaltung der durch die Oberkante 8 der Stützrippen 4 vorgegebenen Konturierung auch bei einer Vielzahl von aufeinanderfolgenden Herstellungszyklen ausgelegt.

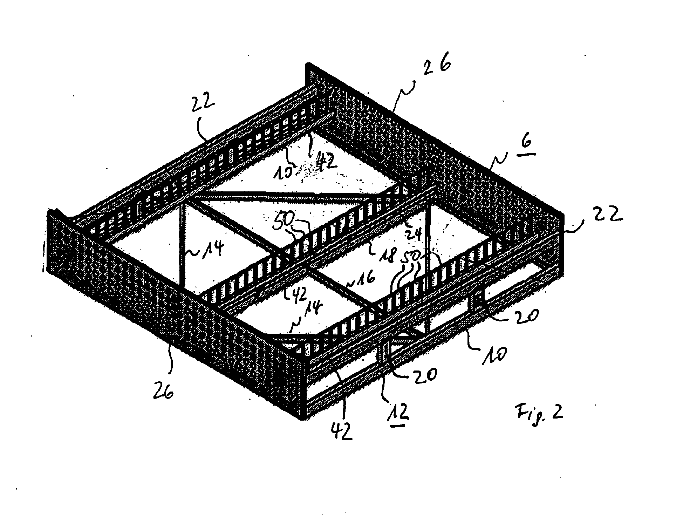

Dazu ist der Halterahmen 6, der in FIG. 2 der Übersichtlichkeit halber ohne die Stützrippen 4 gezeigt ist, seinerseits mehrteilig ausgeführt. Der Halterahmen 6 umfasst dabei einen von einer Mehrzahl von Vierkantrohren 10 (alternativ könnten selbstverständlich auch Rundrohre oder andere geeignete Rohre vorgesehen sein) gebildeten, rechteckförmigen Grundrahmen 12. Der Grundrahmen 12 ist für eine besonders hohe Formstabilität mit einer Anzahl von Diagonalstreben 14 sowie mit einer Längsstrebe 16 und mit einer Querstrebe 18 versteift; selbstverständlich können bedarfsweise auch noch weitere Streben zur Verstärkung des Grundrahmens 12 vorgesehen sein. An den Grundrahmen 12, insbesondere an die Vierkantrohre 10, ist eine Anzahl von Stützen 20 angeschweißt, die ihrerseits jeweils ein Halterohr 22 für die Stützrippen 4 tragen. Die Halterohre 22, sind im Ausführungsbeispiel als Rechteckrohre mit einer Querschnittsabmessung von etwa 60 mm x etwa 30 mm (Höhe x Breite) und einer Wandstärke von etwa 2 mm ausgeführt und geschliffen. Sie sind auf die ihnen jeweils zugeordneten Stützen 20 verschiebbar aufgelegt, nicht aber mit diesen fest verbunden. Dadurch ist sichergestellt, dass während des Herstellungsprozesses, bei dem die unteren Raumbereiche des Halterahmens 6 einer anderen Temperatur ausgesetzt sein können als die oberen Raumbereiche, durch Längenänderungen der Komponenten bedingte Verspannungen nicht in die Halterohre 22 eingeleitet werden.

Im Bereich der Querstrebe 18 ist zudem ein weiteres Halterohr 24 für die Stützrippen 4 angebracht.

Der durch den Grundrahmen 12 gebildete untere Teil des Halterahmens 6 und dessen durch die Halterohre 22 gebildeter oberer Teil sind über am Grundrahmen 12 befestigte flexible Seitenbleche 26 verbunden. Die Seitenbleche 26 dienen dabei unter anderem auch zur seitlichen Fixierung der Halterohre 22. Die Seitenbleche 26, die nach oben hin über den oberen Teil des Halterahmens 6 hinausragen und somit als teilweise Abschirmung dienen können, sind als gelochte Stahlbleche mit einer Dicke von im Ausführungsbeispiel 2 mm ausgeführt. Der Flächenanteil der Löcher beträgt dabei im Ausführungsbeispiel etwa 15 bis 30 %. Durch die geeignete Bemaßung, also insbesondere durch die geeignete Wahl des Flächenanteils der Löcher in Kombination mit der Blechdicke, kann dabei die thermische Trägheit des Systems geeignet eingestellt werden, so dass beim Herstellen des konturierten Glases beim Abkühlen eine zu schnelle Abkühlung der Glasrandbereiche, die zum Bruch führen könnte, verhindert werden kann.

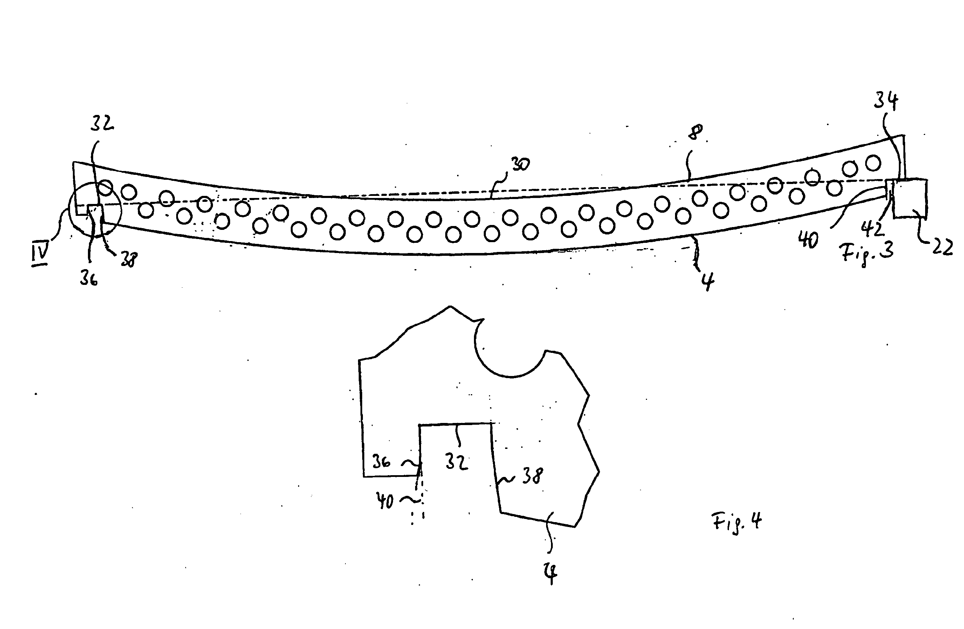

In FIG. 3 ist beispielhaft eine der Stützrippen 4 in seitlicher Ansicht gezeigt. Wie dieser Darstellung besonders deutlich entnehmbar ist, weist die Oberkante 8 der Stützrippe 4 eine parabelförmige Kontur auf, wobei das Minimum 30 der Parabel in Längsrichtung der Stützrippe 4 gesehen in etwa in deren Mitte angeordnet ist. Hierdurch ist eine im Wesentlichen symmetrisch zur Mitte ausgerichtete Anordnung der Stützrippe 4 im Halterahmen 6 möglich, die eine im Wesentlichen waagerechte Orientierung der Stützrippe 4 im Halterahmen 6 ermöglicht. Hierdurch kann das zu behandelnde Flachglas ohne weitere Haltemittel von oben auf die Stützrippe 4 aufgelegt werden. Ein derartiger Halteanschlag könnte Verzerrungen und Glasbruch beim Abkühlen hervorrufen, so dass die nun vorgesehene anschlagsfreie Ausführung besonders bevorzugt ist. Hinsichtlich ihrer Länge ist die Stützrippe 4 dabei derart dimensioniert und bemessen, dass ein ausreichendes Übermaß im Vergleich zur Ausdehnung des zu behandelnden Glases gegeben ist. Gegebenenfalls notwendige Korrekturen der Positionierung bei der Formgebung sind dadurch ermöglicht, so dass Positionierungsfehler oder dergleichen durch ein entsprechendes Verschieben des Glases entlang der Oberkante 8 der Stützrippe 4 berichtigt werden können.

Zum Auflegen auf die Halterohre 22 weist die Stützrippe 4 an einer Anzahl von Auflagepunkten, im Ausführungsbeispiel jeweils endseitig, jeweils eine Auflagefläche 32, 34 auf. Die Auflagefläche 32 am ersten Ende oder ersten Auflagepunkt der Stützrippe 4 ist dabei beidseitig von Fixierkanten 36, 38 begrenzt. Die Auflagefläche 32 ist somit in ihrer Kontur angepasst an den Querschnitt des zugeordneten Halterohrs 22 ausgeführt, und die sich hierdurch ergebende U-förmige Gestaltung ermöglicht ein Einhaken dieses Endes der Stützrippe 4 in dem entsprechenden Halterohr 22. Dabei ist beabsichtigt, über die Fixierkanten 36, 38 die örtliche Positionierung der Stützrippe 4 in Relation diesem Halterohr 22 zu fixieren, so dass eine reproduzierbare räumliche Positionierung der Stützrippe 4 in ihrer Längsrichtung gesehen relativ zum Halterahmen 6 über dieses Einhaken gewährleistet ist. Für eine hinreichende Genauigkeit dieser räumlichen Fixierung ist die durch die Fixierkanten 36, 38 definierte Länge der Auflagefläche 32 und damit die lichte Weite der Kontur der Auflagefläche 32 derart gewählt, dass sie die Breite des zugeordneten Halterohrs 22 geringfügig, im Ausführungsbeispiel um etwa 0,1 mm, übersteigt. Damit ist eine vergleichsweise einfache Montage der Stützrippe 4 durch Einhaken in das jeweilige Halterohr 22 bei hinreichend genauer seitlicher Fixierung gewährleistet.

Im Gegensatz dazu ist die Auflagefläche 34 am anderen Ende der Stützrippe 4 endseitig offen ausgeführt. Nach innen hin ist die Auflagefläche 34 durch eine weitere Fixierkante 40 begrenzt, wobei die Länge der Auflagefläche 34 und die Positionierung der Fixierkante 40 derart gewählt sind, dass bei auf das zugeordnete Halterohr 22 aufgelegter Auflagefläche 34 eine eventuell auftretende thermisch bedingte Längenänderung der Stützrippe 4 durch entsprechende Verschiebung ihres Endbereichs relativ zum zugeordneten Halterohr 22 ermöglicht ist. Die genannten Bauteile sind dabei derart dimensioniert, dass bei auf das zugeordnete Halterohr 22 aufgelegter Auflagefläche 34 im kalten Zustand die Fixierkante 40 einen ausreichenden Abstand zum zugeordneten Halterohr 22 von wenigen mm, im Ausführungsbeispiel etwa 3 mm, aufweist, d. h. dass die Lücke 42 zwischen Fixierkante 40 und der entsprechenden Außenseite des Halterohrs 22 etwa 3 mm beträgt. An diesem Auflagepunkt der Stützrippe 4 überragt die Auflagefläche 34 somit das zugeordnete Halterohr 22 nach innen oder zum benachbarten Auflagepunkt hin um etwa 3 mm, d. h. der Überstand der Auflagefläche 34 über das Halterohr 22 beträgt etwa 3 mm. Dieser Überstand, der bei anderer Dimensionierung der genannten Komponenten selbstverständlich auch mit anderer geeigneter Größe gewählt sein kann, stellt dabei sicher, dass thermisch bedingte Längenänderungen der Stützrippe 4 nicht in unerwünschten Verspannungen resultieren, die die Konturierung der Oberkante 8 beeinträchtigen könnten.

Gerade durch die im Ausführungsbeispiel gemäß FIG. 3 dargestellte Ausführung, also eine Kombination des zum Einhaken in das zugeordnete Halterohr 22 vorgesehenen ersten Endes der Stützrippe 4 mit der Auflagefläche 32 und die endseitig offen ausgeführte Auflagefläche 34 am anderen Ende der Stützrippe 4, ist gewährleistet, dass sämtliche Stützrippen 4 in ihrer räumlichen Positionierung an einem gemeinsamen Halterohr 22 fixiert sind und thermische Längenänderungen sich gleichmäßig für sämtliche Stützrippen 4 in einer entsprechenden Verschiebung des "freien" Endes im Bereich der Auflagefläche 34 auswirken. Störeffekte durch unterschiedliche Einflüsse auf verschiedene Stützrippen 4 infolge thermischer Ausdehnung können damit besonders gering gehalten werden.

Die Stützrippe 4 ist, ähnlich wie das Seitenblech 26, als gelochtes Stahlblech mit einer Dicke von etwa 2 mm, bevorzugt aus temperaturbeständigem Stahl wie beispielsweise V2A, ausgeführt und weist über ihre gesamte Länge eine konstante Höhe auf.

Die Oberkante 8 der Stützrippe 4 ist mit einer Fase von 30° bis 60°, im Ausführungsbeispiel mit 45°, und einer Basisdiagonalen mit einer Länge von 0,1 mm bis 0,5 mm, im Ausführungsbeispiel von ungefähr 0,2 mm, ausgeführt. Des Weiteren ist die Oberkante 8, ebenso wie die Auflageflächen 32, 34, poliert ausgeführt.

Der Endbereich der Stützrippe 4 mit der Auflagefläche 32 ist ausschnittsweise vergrößert in FIG. 4 dargestellt. Wie aus dieser Darstellung ersichtlich ist, sind die Fixierkanten 36, 38 im Mündungsbereich abgeschrägt ausgeführt, wobei der Neigungswinkel 40 im Ausführungsbeispiel etwa 5° beträgt. Hierdurch ist beim Einhaken der Stützrippe 4 in das Halterohr 22 eine erleichterte Montage ermöglicht.

Wie der Darstellung in FIG. 1 entnehmbar ist, sind die Stützrippen 4 im Wesentlichen parallel zueinander im Halterahmen 6 angeordnet, wobei sie mit ihren Auflageflächen 32, 34 auf den jeweils zugeordneten Halterohre 22 aufliegen. Im Hinblick auf das herzustellende konturierte Glas sind die Stützrippen 4 im Abstand von etwa 60 mm zueinander angeordnet. Im seitlichen Endbereich beträgt der Abstand der jeweils äußersten Stützrippe 4 zum benachbarten Seitenblech 26 jeweils etwa 30 mm.

In seitlicher Richtung ist die Biegeform 1 derart dimensioniert, dass das zu behandelnde Flachglas im auf die Biegeform 1 aufgelegten Zustand die jeweils äußerste Stützrippe 4 um etwa 15 mm nach außen hin überragt. Hierdurch ist gewährleistet, dass ein Verhaken mit benachbarten Stützrippen 4 oder den Seitenblechen 26 (wäre möglich bei zu geringem Abstand des Glasrandes zur benachbarten Stützrippe 4 oder zum Seitenblech 26) ebenso sicher vermieden werden kann, wie auch eine hohe Biegegenauigkeit gewährleistet werden kann (diese könnte bei zu großem Abstand beeinträchtigt werden).

Wie der Darstellung in FIG. 2 entnehmbar ist, sind zudem an separaten Bügeltragrohren 42 Fixierbügel 50 zur seitlichen Abstützung der Stützrippen 4 befestigt. Alternativ könnten die Fixierbügel 50 auch direkt an den Halterohren 22, 24 angebracht sein. Die Fixierbügel 50 sind benachbart zueinander unter Bildung von Lücken angeordnet, wobei die Lücke zwischen benachbarten Fixierbügel 50 geringfügig breiter als die Dicke der Stützrippen 4 gewählt ist. Durch diese etwa 1 bis 2 mm größer gewählte Lückenbreite ist gewährleistet, dass die Stützrippen 4 bei zuverlässiger seitlicher Abstützung sich dennoch in Folge thermischer Ausdehnung vergleichsweise ungehindert gegenüber den Halterohren 22, 24 und den Fixierbügeln 50 bewegen können, ohne zu verklemmen. Auch hierdurch ist die Einleitung von thermisch induzierten Verspannungen in die Stützrippen 4 in Folge von Längenausdehnung zuverlässig vermieden.

Die Fixierbügel 50 weisen eine Höhe von etwa 75 % der Höhe der Stützrippen 4 auf.

Die Fixierbügel 50 sind im Ausführungsbeispiel aus Stahldraht mit einem Durchmesser von 5 mm gefertigt; alternativ wäre auch eine Ausführung aus Rohrmaterial oder dergleichen möglich. Durch den runden Querschnitt der Fixierbügel 50 ist dabei sichergestellt, dass der Kontaktbereich mit der jeweiligen Stützrippe 4 vergleichsweise klein gehalten ist. Alternativ könnten die Fixierbügel 50 auch mit rechteckigem oder anderem Querschnitt ausgeführt sein. Allerdings könnte eine vergrößerte Kontaktfläche, wie sie beispielsweise bei einer Ausführung der Fixierbügel 50 mit rechteckigem Querschnitt entstehen könnte, zu einem Verhaken mit den jeweiligen Stützrippen 4 und infolge der thermischen Ausdehnungen oder Kontraktionen zu einer Positionsverschiebung der Stützrippen 4 in Relation zu den Fixierbügeln 50 führen, so dass die Ausführung der Fixierbügel 50 mit rundem Querschnitt besonders bevorzugt ist.

Durch die Ausführung der Fixierbügel 50 mit rundem Querschnitt ist dabei insbesondere erreicht, dass geometriebedingt im Bereich der Berührung von Stützrippe und Fixierbügel ein tangentialer Kontakt der beiden Flächen miteinander vorliegt. Hierdurch ist das Risiko des Verhakens bei einer Relativbewegung dieser Komponenten zueinander noch weiter herabgesetzt.

Zur Bereitstellung eines auch nach mehreren Herstellungszyklen hinsichtlich der Konturierung reproduzierbaren Systems sind die Stützrippen 4 als Paket oder Satz in nummerierter Reihenfolge vorgehalten, so dass auch beim Austausch von Rippensätzen (beispielsweise bei Formatwechsel des konturierenden Glases) ein bereits benutzter Satz reproduzierbar wieder in den Halterahmen 6 eingehängt werden kann. Die Konturierung oder das Abfräsen der Stützrippen 4 erfolgt dabei ebenfalls im Paket mit der Reihenfolge entsprechend dem später vorgesehenen Einsatz auf der Biegeform.

### Bezugszeichenliste

- 1: Biegeform
- 2: Stützstruktur
- 4: Stützrippen
- 6: Halterahmen
- 8: Oberkante
- 10: Vierkantrohre
- 12: Grundrahmen
- 14: Diagonalstreben
- 16: Längsstreben
- 18: Querstreben
- 20: Stützen
- 22, 24: Halterohre
- 26: Seitenbleche
- 30: Minimum
- 32, 34: Auflagefläche
- 36, 38, 40: Fixierkante
- 42: Bügeltragrohr
- 50: Fixierbügel

## Patentansprüche

1. Biegeform (1), insbesondere zur Herstellung von konturiertem oder gebogenem Glas, mit einem Halterahmen (6), der eine von einer Anzahl von annähernd parallel zueinander ausgerichteten Stützrippen (4) gebildete Stützstruktur (2) trägt, wobei die Stützrippen (4) an einer Anzahl von Auflagepunkten jeweils auf einem Halterohr (22) des Halterahmens (6) aufliegen, und wobei die oder jede Stützrippe (4) im Bereich der Auflagepunkte in Relation zum jeweiligen Halterohr (22) derart konturiert ist, dass sie an zumindest einem ersten der Auflagepunkte in ihrer Längsrichtung gesehen relativ zum Halterohr (22) um eine Distanz von mindestens 0,5 mm, bevorzugt mindestens 3 mm, vorzugsweise mindestens 5 mm, verschiebbar ist.

2. Biegeform (1) nach Anspruch 1, bei der die oder jede Stützrippe (4) im Bereich der Auflagepunkte in Relation zum jeweiligen Halterohr (22) derart konturiert ist, dass sie an zumindest einem weiteren Auflagepunkt in ihrer Längsrichtung gesehen relativ zum Halterohr (22) um eine Distanz von weniger als, vorzugsweise höchstens der Hälfte, besonders bevorzugt höchstens einem Fünftel, der Verschiebedistanz am ersten Auflagepunkt verschiebbar ist.

3. Biegeform (1) nach Anspruch 2, bei der die als Fixierpunkte vorgesehenen weiteren Auflagepunkte für sämtliche Stützrippen (4) ein und demselben der Halterohre (22) zugeordnet sind.

4. Biegeform (1) nach einem der Ansprüche 1 bis 3, bei der die oder jede Stützrippe (4) jeweils mit einer Auflagefläche (32, 34) auf dem jeweiligen Halterohr (22) aufliegt, wobei an zumindest einem Auflagepunkt jeder Stützrippe (4) die jeweilige Auflagefläche (34) in ihrer lichten Weite das zugeordnete Halterohr (22) um mindestens 0,5 mm, vorzugsweise um mindestens 1 mm, überragt.

5. Biegeform (1) nach Anspruch 4, bei der im Bereich eines Auflagepunkts, vorzugsweise an einem Ende, jeder Stützrippe (4) die jeweilige Auflagefläche (32) angepasst an die Querschnittskontur des zugeordneten Halterohrs (22) konturiert ist und eine lichte Weite von geringfügig mehr, vorzugsweise etwa 0,05 bis 0,2 mm mehr, besonders bevorzugt etwa 0,1 mm mehr, als die Breite des zugeordneten Halterohrs (22) aufweist.

6. Biegeform (1) nach einem der Ansprüche 1 bis 5, deren Stützrippen (4) jeweils als metallisches Tragblech, vorzugsweise aus Stahlblech, mit einer Dicke von 1 bis 3 mm, vorzugsweise von 1,5 bis 2,5 mm, besonders bevorzugt von etwa 2 mm, ausgeführt sind.

7. Biegeform (1) nach einem der Ansprüche 1 bis 6, deren Stützrippen (4) jeweils als Lochblech ausgeführt sind, wobei der Flächenanteil der Löcher zwischen 5 und 50 %, bevorzugt zwischen 15 und 30 %, beträgt.

8. Biegeform (1) nach einem der Ansprüche 1 bis 7, deren Stützrippen (4) etwa 30 bis 100 mm, bevorzugt etwa 60 mm, voneinander beabstandet angeordnet sind.

9. Biegeform (1) nach einem der Ansprüche 1 bis 8, bei der die Oberkanten (8) der Stützrippen (4) jeweils in Form eines Parabelsegments ausgeführt sind.

10. Biegeform (1) nach einem der Ansprüche 1 bis 9, bei der die Oberkanten (8) der Stützrippen (4) jeweils mit Fase, vorzugsweise mit einer Basisdiagonalen mit einer Länge von etwa 0,2 mm, ausgeführt sind.

11. Biegeform (1) nach einem der Ansprüche 1 bis 10, bei der die die Stützrippen (4) der tragenden Halterohre (22) verschiebbar auf eine Anzahl von an einem Grundrahmen (12) des Halterahmens (6) befestigten Stützen (20) aufgelegt sind.

12. Biegeform (1) nach Anspruch 11, deren Grundrahmen (12) mit einer Anzahl von Diagonalstreben (14) versteift ist.

13. Biegeform (1) nach einem der Ansprüche 1 bis 12, deren Halterohre (22) als Rechteckrohre, vorzugsweise mit den Querschnittsabmessungen etwa 60 mm x etwa 30 mm, ausgeführt sind.

14. Biegeform (1) nach einem der Ansprüche 1 bis 13, deren Stützrippen (4) seitlich durch an den Halterohren (22) oder an separaten Bügeltragrohren (42) befestigte Fixierbügel (50) abgestützt sind.

15. Biegeform (1) nach Anspruch 14, deren Fixierbügel (50) eine Höhe von mindestens der Hälfte der Höhe der Stützrippen (4) und von höchstens der Höhe der Stützrippen (4) aufweisen.

16. Biegeform (1) nach Anspruch 14 oder 15, deren Fixierbügel (50) aus Draht, bevorzugt aus Stahldraht, mit einem Durchmesser von zwischen 2 und 10 mm, bevorzugt von etwa 5 mm, gefertigt sind.

17. Verfahren zur Herstellung von konturiertem Glas, bei dem ein Ausgangs-Glaskörper, insbesondere ein Flachglas, auf eine Biegeform (1) nach einem der Ansprüche 1 bis 16 aufgelegt und anschließend gemeinsam mit der Biegeform (1) auf eine Temperatur oberhalb der Erweichungstemperatur von Glas aufgeheizt wird.

18. Verfahren nach Anspruch 17, bei dem das Glas im Längsschnitt gesehen mit der Kontur eines Soll-Parabelsegments hergestellt wird, indem es beim Auflegen auf die Stützrippen (4) der Biegeform (1) derart positioniert wird, dass die Stützrippen (4) im Auflagebereich ein Ist-Parabelsegment bilden, das in x-Richtung der Parabel gesehen relativ zum Soll-Parabelsegment um einen vorgegebenen Offset-Betrag verschoben ist.

19. Verfahren nach Anspruch 18, bei dem als Offset-Betrag eine Verschiebung von etwa 20 cm bis 30 cm, vorzugsweise von etwa 23 cm, gewählt wird.

## Claims

1. A bending mold (1), in particular for producing contoured or bent glass, having a holding frame (6) carrying a supporting structure (2) formed by a plurality of supporting ribs (4) oriented approximately in parallel to each other, the supporting ribs (4) each resting in a plurality of supporting points on a holding tube (22) of the holding frame (6), and the or each supporting rib (4) being contoured in the area of the supporting points in relation to the respective holding tube (22) in such a way that it is displaceable in at least a first one of the supporting points, viewed in its longitudinal direction, relative to the holding tube (22), by a distance of at least 0.5 mm, preferably at least 3 mm, preferably at least 5 mm.

2. The bending mold (1) of claim 1, wherein the or each supporting rib (4) is contoured in the area of the supporting points in relation to the respective holding tube (22) in such a way that it is displaceable in at least one other supporting point, viewed in its longitudinal direction, relative to the holding tube (22), by a distance of less than, preferably maximally half, particularly preferably maximally one fifth, of the displacement distance at the first supporting point.

3. The bending mold (1) of claim 2, wherein the further supporting points provided as locating points are associated for all supporting ribs (4) with one and the same holding tube (22).

4. The bending mold (1) of any of claims 1 to 3, wherein the or each supporting rib (4) each rests with a supporting surface (32, 34) on the respective holding tube (22), the clearance of the respective supporting surface (34) projecting, in at least one supporting point of each supporting rib (4), over the associated holding tube (22) by at least 0.5 mm, preferably by at least 1 mm.

5. The bending mold (1) of claim 4, wherein, in the area of a supporting point, preferably at one end, of each supporting rib (4), the respective supporting surface (32) is contoured in a way matching the cross-sectional contour of the associated holding tube (22) and has a clearance of slightly more, preferably approx. 0.05 to 0.2 mm more, particularly preferably approx. 0.1 mm more, than the width of the associated holding tube (22).

6. The bending mold (1) of any of claims 1 to 5, whose supporting ribs (4) are each configured as metallic supporting plates, preferably made of steel sheet, with a thickness of 1 to 3 mm, preferably of 1.5 to 2.5 mm, particularly preferably of approx. 2 mm.

7. The bending mold (1) of any of claims 1 to 6, whose supporting ribs (4) are each configured as perforated plates, the surface fraction of the holes lying between 5 and 50 %, preferably between 15 and 30 %.

8. The bending mold (1) of any of claims 1 to 7, whose supporting ribs (4) are spaced approx. 30 to 100 mm, preferably approx. 60 mm, from each other.

9. The bending mold (1) of any of claims 1 to 8, wherein the upper edges (8) of the supporting ribs (4) are each configured in the shape of parabolic segments.

10. The bending mold (1) of any of claims 1 to 9, wherein the upper edges (8) of the supporting ribs (4) are designed with a chamfer, preferably having a base diagonal with a length of approx. 0.2 mm.

11. The bending mold (1) of any of claims 1 to 10, wherein the supporting ribs (4) of the carrying holding tubes (22) are displaceably placed on a plurality of supports (20) fastened on a base frame (12) of the holding frame (6).

12. The bending mold (1) of claim 11, whose base frame (12) is braced with a plurality of diagonal struts (14).

13. The bending mold (1) of any of claims 1 to 12, whose holding tubes (22) are configured as rectangular tubes, preferably with the cross-sectional dimensions of approx. 60 mm x approx. 30 mm.

14. The bending mold (1) of any of claims 1 to 13, whose supporting ribs (4) are supported laterally by locating straps (50) fastened on the holding tubes (22) or on separate strap-supporting tubes (42).

15. The bending mold (1) of claim 14, whose locating straps (50) have a height of at least half the height of the supporting ribs (4) and maximally the height of the supporting ribs (4).

16. The bending mold (1) of claim 14 or 15, whose locating straps (50) are made of wire, preferably steel wire, with a diameter between 2 mm and 10 mm, preferably of approx. 5 mm.

17. A method for producing contoured glass, wherein a starting glass body, in particular a flat glass, is placed on a bending mold (1) of any of claims 1 to 16 and is then heated up, together with the bending mold (1), to a temperature above the softening point of glass.

18. The method of claim 17, wherein the glass is produced with the contour of a nominal parabolic segment, viewed in longitudinal section, by positioning it, when placing it on the supporting ribs (4) of the bending mold (1), in such a way that the supporting ribs (4) form in the bearing area an actual parabolic segment which is offset against the nominal parabolic segment, viewed in the x-direction of the parabola, by a predefined offset amount.

19. The method of claim 18, wherein a displacement of approx. 20 cm to 30 cm, preferably of approx. 23 cm, is chosen as the offset amount.

## Revendications

1. Moule à courbure (1), en particulier pour produire du verre profilé ou courbé, ayant un cadre d'appui (6) portant une structure d'appui (2) formée par une pluralité de nervures d'appui (4) orientées environ en parallèle l'une à l'autre, chacune des nervures d'appui (4) s'appuyant sur une pluralité de points d'appui sur un tube d'appui (22) du cadre d'appui (6), et la ou chaque nervure d'appui (4) étant profilée dans la zone des points d'appui en relation au tube d'appui (22) respectif de façon à ce qu'elle soit déplaçable dans au moins un premier des points d'appui, vu dans sa direction longitudinale, relativement au tube d'appui (22), par une distance d'au moins 0,5 mm, de préférence au moins 3 mm, de préférence au moins 5 mm.

2. Moule à courbure (1) selon la revendication 1, dans lequel la ou chaque nervure d'appui (4) est profilée dans la zone des points d'appui in relation au tube d'appui (22) respectif de façon à ce qu'elle soit déplaçable dans au moins un autre point d'appui, vu dans sa direction longitudinale, relativement au tube d'appui (22), par une distance de moins, de préférence maximalement de la moitié, particulièment de préférence de maximalement un cinquième, de la distance de déplacement au premier point d'appui.

3. Moule à courbure (1) selon la revendication 2, dans lequel les autres points d'appui prévus comme points de positionnement sont affectés pour toutes les nervures d'appui (4) au même tube d'appui (22).

4. Moule à courbure (1) selon l'une quelconque des revendications 1 à 3, dans lequel la ou chaque nervure d'appui (4) s'appuie, à chaque fois avec une surface d'appui (32, 34), sur le tube d'appui (22) respectif, l'écartement de la surface d'appui (34) respective faisant saillie, dans au moins un point d'appui de chaque nervure d'appui (4), d'au moins 0,5 mm, de préférence d'au moins 1 mm, sur le tube d'appui (22) y affecté.

5. Moule à courbure (1) selon la revendication 4, dans lequel, dans la zone d'un point d'appui, de préférence à un bout, de chaque nervure d'appui (4), la surface d'appui (32) respective est profilée d'une manière adaptée au profil de la section transversale du tube d'appui (22) y affecté et a un écartement de légèrement plus, de préférence d'environ 0,05 à 0,2 mm plus, particulièrement de préférence d'environ 0,1 mm plus, de la largeur du tube d'appui (22) y affecté.

6. Moule à courbure (1) selon l'une quelconque des revendications 1 à 5, dont les nervures d'appui (4) sont chacune configurée comme plaque de support métallique, de préférence faite de tôle d'acier, d'une épaisseur de 1 à 3 mm, de préférence de 1,5 to 2,5 mm, particulièrement de préférence d'environ 2 mm.

7. Moule à courbure (1) selon l'une quelconque des revendications 1 à 6, dont les nervures d'appui (4) sont chacune configurée comme tôle perforée, la part superficielle des trous étant de 5 à 50 %, de préférence de 15 à 30 %.

8. Moule à courbure (1) selon l'une quelconque des revendications 1 à 7, dont les nervures d'appui (4) sont espacées d'environ 30 to 100 mm, de préférence d'environ 60 mm, l'une de l'autre.

9. Moule à courbure (1) selon l'une quelconque des revendications 1 à 8, dans lequel chacune des arêtes (8) supérieures des nervures d'appui (4) est configurée dans la forme de segments paraboliques.

10. Moule à courbure (1) selon l'une quelconque des revendications 1 à 9, dans lequel les arêtes (8) supérieures des nervures d'appui (4) sont configurées avec un chanfrein, ayant de préférence une diagonale base d'une longueur d'environ 0,2 mm.

11. Moule à courbure (1) selon l'une quelconque des revendications 1 à 10, dans lequel les nervures d'appui (4) des tubes d'appui (22) de support sont, de manière déplaçable, sur une pluralité de supports (20) fixés à un cadre de base (12) du cadre d'appui (6).

12. Moule à courbure (1) selon la revendication 11, dont le cadre de base (12) est rigidifié par une pluralité d'étais diagonaux (14).

13. Moule à courbure (1) selon l'une quelconque des revendications 1 à 12, dont les tubes d'appui (22) sont configurés comme tubes rectangulaires, de préférence avec les dimensions de la section transversale d'environ 60 mm x environ 30 mm.

14. Moule à courbure (1) selon l'une quelconque des revendications 1 à 13, dont les nervures d'appui (4) sont supportées latéralement par des étriers de positionnement (50) fixés aux tubes d'appui (22) ou à des tubes d'appui d'étrier (42) séparés.

15. Moule à courbure (1) selon la revendication 14, dont les étriers de positionnement (50) ont une hauteur d'au moins la moitié de la hauteur des nervures d'appui (4) et qu maximum de la hauteur des nervures d'appui (4).

16. Moule à courbure (1) selon la revendication 14 or 15, dont les étriers de positionnement (50) sont faits de fil, de préférence de fil d'acier, avec un diamètre entre 2 mm et 10 mm, de préférence d'environ 5 mm.

17. Procédé pour produire du verre profilé, dans lequel un corps de verre de départ, en particulier un verre plat, est placé sur un moule à courbure (1) selon l'une quelconque des revendications 1 à 16 et est ensuite échauffé, avec le moule à courbure (1), à une température au-dessus du point de ramollissement du verre.

18. Procédé selon la revendication 17, dans lequel le verre est produit avec le profil d'un segment parabolique de consigne, vu en section longitudinal, en le positionnant, lorsqu'il est placé sur les nervures d'appui (4) du moule à courbure (1), de façon à ce que les nervures d'appui (4) forment dans la zone d'appui un segment parabolique effectif qui est décalé contre le segment parabolique de consigne, vu en la direction x de la parabole, par un montant prédéfini de décalage.

19. Procédé selon la revendication 18, dans lequel un déplacement d'environ 20 cm à 30 cm, de préférence d'environ 23 cm, est choisi comme montant de décalage.
